# EUROPEAN PATENT APPLICATION

(11) **EP 0 561 542 A1**
(43) Date of publication of application: **22.09.1993**
(21) Application number: 93301761.8
(22) Date of filing: 09.03.1993
(51) Int. Cl.: C09K 21/02

(54) **Fibre-free thermal insulation material**

(30) Priority: 17.03.1992 DE 9203589 U
(71) Applicant: FOSECO INTERNATIONAL LIMITED, Nechells Birmingham B7 5JR (GB)
(72) Inventor: Comes, Heinrich, W- 3 Weseke (DE)
(74) Representative: Eyles, Winifred Joyce

(57) **Abstract**

The invention relates to a thermal insulation material that is fibre free.

It provides a fibre-free thermal insulation material for high temperatures comprising a pyrogenic metal oxide, a refractory material and a binder. It may contain a finely grained thermal radiation-reflecting material, e.g. titania. The pyrogenic oxide, refractory material and binder may be present in a homogeneous mixture or the pyrogenic metal oxide and the binder on the one hand and the refractory material on the other hand may be in different layers of a multi-layer construction.

## Description

In order to be able to run thermal processes in an economical manner it is common practice today to thermally delimit reaction zones from the environment in order to keep the loss of heat as low as possible and to exploit the amount of heat used to the utmost efficiency. There are presently two ways employed to solve this problem:
a) Insulating materials are used where thermal conductivity is so high that through cooling the respective material its melting temperature is not reached and the required highly insulating properties are maintained permanently.
b) Insulation materials, are used whose insulation characteristics and lives are adapted to the thermal process in such a manner that they exhibit low outside temperatures in the monolayer or polylayer structure and thus lose little heat to the environment, while simultaneously they meet the required mechanical and economical requirements.

While in case a) there are generally used metals, highly heat-conductive ceramics or so-called composites, there are used in case b) refractory substances, optionally in combination with fibres or refractory foams. All these materials have in common that they strongly reduce the passage of thermal radiation and the heat convection by means of a large proportion of micropores and that they achieve this in an economically acceptable manner.

When fibres are used as thermal insulation material, the insulation effect resides in the principle that micropores are formed, which are created by stacking the fibres like beams, and which are held in their position by organic or inorganic binders. This creates very small cavities or micropores which prevent heat convection. By means of reflection surfaces on the fibres and their spatial construction, there is produced a diffused thermal radiation within these cavities. It is true that fibres have the advantage that flexible bodies can be produced therefrom which are able to adapt themselves to the required structural conditions. However, they also have the substantial disadvantage that with specific chemical compositions and/or dimensions they can be injurious to health.

It is, therefore, an object of the invention to provide a thermal insulation material which, on the one hand is free of fibres and, on the other hand, substantially and permanently protects high temperature regions against loss of heat.

The invention solves this problem by means of a fibre-free thermal insulation material for high temperatures which, according to Claim 1, is characterised by a content of a pyrogenic metal oxide, a refractory material and a binder.

Sub-claims 2 to 13 indicate preferred embodiments of the thermal insulation material according to the invention.

Preferred pyrogenic metal oxides are pyrogenic silica (pyrogenic silicic acid) and/or pyrogenic alumina (pyrogenic alum earth). Such metal oxides are commercially available. However, they have the great disadvantage that they only have low mechanical strength and, therefore, are difficult to handle in compact form.

The refractory material preferably is a light refractory, particularly light chamotte, perlite (i.e. silicates) and/or flue ash, e.g. hard coal flue ash. As refractory material however, a normal refractory, particularly chamotte, magnesite or dolomite, can also be used advantageously.

The binder can basically be any binder known in the field of thermal insulation materials. Preferred are water glass or aluminum phosphate. Apart from so-called "chemical binders" there can also be considered "ceramic binders". These are mainly metal oxides which, due to the action of heat, react with other materials, thus inducing a binder effect.

For further reducing the passage of thermal radiation through the insulation material it may be preferable to add a finely grained thermal radiation-reflecting material with high refractoriness. Titania is particularly suitable for this purpose. The grain size of this material is within the order of magnitude of the grain size of the pyrogenic metal oxide or of the refractory material.

In the thermal insulation material according to the invention, the pyrogenic metal oxide and the refractory material are preferably present as a homogeneous mixture.

The density of the thermal insulation material can vary widely depending on the purpose of use and can e.g. be within the range of 0.27 to 1.3 g/cm³, preferably of 0.27 to 0.40 g/cm³. This corresponds approximately to the ratios of common fibre-containing thermal insulation materials.

The coefficient of thermal conductivity λ of the material according to the invention, generally is within the range of 0.15 to 0.30 W/m · K.

To prepare the thermal insulation material according to the invention, the pyrogenic metal oxide is mixed with the refractory material and the binder. To reduce the passage of thermal radiation through the insulation material, there is optionally added a thermal radiation-reflecting material, like titania. The obtained mixture is moulded in a pressure operation to the desired outer shape. Subsequently, the moulded article, e.g. a plate, is dried in dependency of the binder used, which may e.g. be done at 100 to 300°C. The coefficient of thermal conductivity λ of the plate may be e.g., about 0.17 W/m · K, which corresponds to the order of magnitude of a corresponding vacuum-moulded heat insulation fibrous material.

The pyrogenic metal oxide and the refractory material need not be mixed homogeneously. According to another preferred embodiment they can also be present in different layers of the thermal insulation material. In an expedient embodiment the core of the material consists of the pyrogenic metal oxide including binder and is surrounded by a jacket of the refractory material or of a mixture thereof with the pyrogenic metal oxide. A suitable refractory material is a light refractory, e.g. light chamotte and/or flue ash. A normal refractory, like chamotte, magnesite or dolomite, can also be used.

Particularly advantageous is an embodiment according to the invention wherein the thermal insulation material has a sandwich structure of two or more layers. Such a structure can e.g. consist of two outer layers of a light or a normal refractory material and an intermediate layer of a pyrogenic metal oxide with a binder.

A further example for this kind of construction is a thermal insulation material comprising
a) a base layer of a light refractory material or a mixture thereof with a pyrogenic metal oxide and a binder,
b) a perforated layer of the pyrogenic metal oxide and a binder disposed on top of the base layer, the holes in the perforated layer being completely filled with the light refractory material or a mixture thereof with a pyrogenic metal oxide,
c) an intermediate layer arranged on top of the perforated layer and made of the light refractory material or a mixture thereof with a pyrogenic metal oxide and a binder,
d) a combined layer wherein first regions made of the light refractory material or a mixture thereof with a pyrogenic metal oxide and a binder are present side by side with second regions made of the pyrogenic metal oxide and a binder, the second regions being arranged in the direction of the thickness of the thermal insulation material above the holes of the perforated layer and congruent therewith, and
e) a cover layer of a light refractory material or a mixture thereof with a pyrogenic metal oxide and a binder.

With this embodiment there is achieved a uniform coefficient of heat conductivity over the entire surface of the sandwich-like insulation material, in the direction vertically to the plate surface.

If desired, the pure pyrogenic metal oxide of the thermal insulation material can be replaced by a mixture thereof with a refractory material.

The thermal insulation material according to the invention is suitable for applications in the temperature range of about 200 to 1600°C. Its gross density is preferably within the range of 0.27 to 1.3 g/cm³, particularly of 0.27 to 0.40 g/cm³. "Gross density" means the density of the material after its manufacture including a drying step at about 100°C.

If the temperature is higher when this material is used the density can change.

The invention is further described by way of example only with reference to the accompanying drawings in which:-
Figure 1 is a cross-section through a thermal insulation material in the form of a plate of homogeneous structure;
Figure 2 is a cross-section through a thermal insulation material in the form of a plate having a core of a pyrogenic metal oxide with a binder, surrounded by a jacket of a light refractory;
Figure 3 is a partial cross-section similar to Figure 2 through a thermal insulation material with increased core thickness, wherein the jacket surrounding the core consists of a mixture of a light refractory and a pyrogenic metal oxide with a binder; and
Figure 4 is a section from a plate-shaped thermal insulation material with a sandwich structure, consisting of five layers.

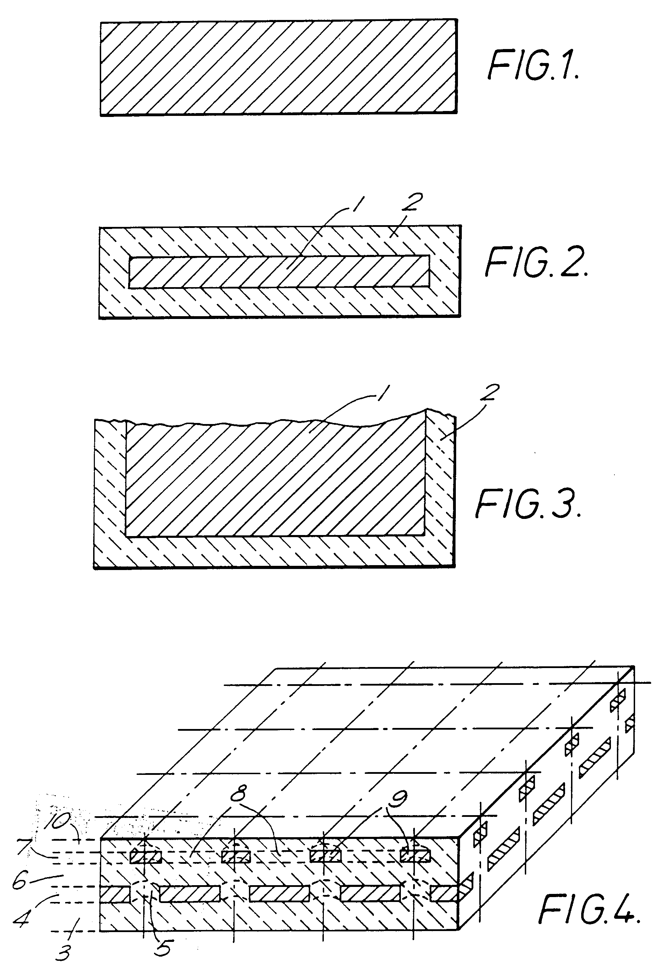

Figure 1 shows a simple embodiment of the thermal insulation material according to the invention. It consists of a homogeneous mixture of a pyrogenic metal oxide with binder and a light refractory. The two components preferably have the following compositions:

| Light Refractory | |
|---|---|
| Component | % |
| Ti0₂ | 1 to 30 |
| Al₂0₃ | 30 to 60 |
| Si0₂ | 50 to 70 |
| Fe₂0₃ | 1 to 4 |
| H₂0 | <1 |
| N | 2 |
| C0₂ | 3 |

| Pyrogenic metal oxide | | |
|---|---|---|
| Component | % (for 800°C) | % (for 1600°C) |
| Ti0₂ | 1 to 30 | 1 to 30 |
| Si0₂ | 70 to 95 | -- |
| Al₂0₃ | -- | 70 to 95 |
| Binder | Balance | Balance |

Figure 2 shows a thermal insulation material with a core 1 of a pyrogenic metal oxide including binder and with a surrounding jacket 2 of a light refractory. The compositions of the pyrogenic metal oxide and the light refractory correspond to those indicated above.

The pyrogenic metal oxide, which is present in the thermal insulating material as microporous thermal insulating material, has a surface of 200 to 700 m²/g, a grain size of d₅₀ of 4 nm, a coefficient of thermal conductivity λ of 0.07 W/m · K (at 800°C) as well as a density γ of 0.3 to 0.35 g/cm³.

The light refractory has a grain size d₅₀ of 100 µm, a coefficient of thermal conductivity λ of 0.17 W/m · K (at 800°C) and a density γ of 0.35 g/cm³.

Figure 3 shows an embodiment of the thermal insulation material which is similar to that shown in Figure 2. The core 1 consists of the above-indicated pyrogenic metal oxide. The jacket 2, however, is composed of a homogeneous mixture of pyrogenic metal oxide and the above light refractory as well as a binder.

Figure 4 shows a thermal insulation material with a sandwich structure of five layers, for which pyrogenic metal oxide and a light refractory according to the above composition were used. The sandwich structure consists of a base layer 3 of a light refractory, optionally with a binder. Above said binder a perforated layer 4 of a pyrogenic metal oxide and optionally a binder is arranged. The holes 5 of layer 4 have a diameter of e.g. 20 to 50 mm and are filled completely with the light refractory. On top of the perforated layer 4 there is an intermediate layer 6 made of the light refractory and on top of this there is disposed a combined layer 7. The latter consists of first regions 8 of the light refractory and of second regions 9 of the pyrogenic metal oxide, each optionally with a binder. The second regions 9 of the pyrogenic metal oxide are located in the direction of the thickness of the thermal insulation material (vertically to the planes of the layers of the sandwich structure) above the holes 5 of the perforated layers 4 and are congruent therewith.

On the combined layer 7 there is disposed a cover layer 10 of the refractory.

Said sandwich structure guarantees a uniform coefficient of thermal conductivity all over its surface.

### EXAMPLE 1

A thermal insulation material was produced in the form of a plate having a thickness of 40 mm. The plate consisted of two outer layers, each having a thickness of 10 mm, and of an intermediate layer having a thickness of 20 mm.

The outer layers and the intermediate layer had the following compositions:

| Outer layer | |
|---|---|
| Component | % |
| Flue ash | 61.5 |
| Coarse perlite | 15.4 |
| Water glass | 23.1 |

| Chemical analysis of the outer layer | |
|---|---|
| Component | % |
| Si0₂ | 60 to 65 |
| Al₂0₃ | 20 to 25 |
| Na₂0 | 5 (maximum) |
| K₂0 | 2 (maximum) |
| Co₂ ) | |
| ) | 2 (maximum) |
| N₂ ) | |

In this case the refractory material is a light refractory.

| Intermediate layer | |
|---|---|
| Component | % |
| Pyrogenic silicic acid (or pyrogenic alum earth) | 85 to 97 |
| Binder | 15 to 3 |

When the thermal insulation material was subjected on one side only to a thermal load with a temperature of 800°C, there was measured a temperature of only 80°C on the other side of this material.

In contrast thereto, there was measured at a common heat insulation plate, which was produced of fibres and substantially consisted of alumina and silica, a temperature of 125°C on the side away from the temperature load.

### EXAMPLE 2

Another heat insulation material was produced in the form of a plate having a thickness of 40 mm. The plate consisted of a homogeneous mixture of a pyrogenic silica, a light refractory and a binder each with the composition as indicated in Example 1.

When the plate was loaded with a temperature of 800°C on one side, there was measured a temperature of 100°C on the other side of the plate.

Compared thereto, with a common heat insulation plate having a thickness of 40 mm and consisting of a fibre material, there could only be achieved a temperature of 125°C on the side away from the temperature load.

## Claims

1. Fibre-free thermal insulation material for high temperatures, characterised by comprising a pyrogenic metal oxide, a refractory material and a binder.

2. Thermal insulation material according to Claim 1, characterised in that the pyrogenic metal oxide is pyrogenic silica and/or pyrogenic alumina.

3. Thermal insulation material material according to Claim 1 or 2, characterised in that the refractory material is a light refractory, particularly light chamotte, perlite and/or flue ash.

4. Thermal insulation material according to Claim 1 or 2, characterised in that the refractory material is a normal refractory, particularly chamotte, magnesite or dolomite.

5. Thermal insulation material according to any one of the preceding claims, characterised in that it additionally contains a finely grained thermal radiation-reflecting material having high refractoriness.

6. Thermal insulation material according to Claim 5, characterised in that the thermal radiation-reflecting material is titania.

7. Thermal insulation material according to any one of the preceding claims, characterised in that the pyrogenic metal oxide, the refractory material and the binder are present as a homogeneous mixture.

8. Thermal insulation material according to any one of the preceding claims, characterised in that it has a gross density of 0.27 to 1.30 g/cm³ and a coefficient of thermal conductivity λ of 0.15 to 0.30 W/m · K.

9. Thermal insulation material according to any one of Claims 1 to 6, characterised in that the pyrogenic metal oxide and the binder, on the one hand, as well as the refractory material, on the other hand, optionally together with a binder, are present in different layers.

10. Thermal insulation material according to Claim 9, characterised in that it is composed of a core (1) of a pyrogenic metal oxide with a binder and of a jacket (2), which consists of a refractory material or of a mixture thereof with a pyrogenic metal oxide and optionally a binder.

11. Thermal insulation material according to any of the preceding claims, characterised in that it has a sandwich structure of two or more layers.

12. Thermal insulation material according to Claim 11, characterised by two outer layers of a light or a normal refractory and an intermediate layer of a pyrogenic metal oxide and a binder.

13. Thermal insulation material according to Claim 11, characterised by
a) a base layer (3) of a light refractory or a mixture thereof with a pyrogenic metal oxide and a binder
b) a perforated layer (4) arranged on top of the base layer (3) and made of the pyrogenic metal oxide and a binder, the holes (5) in the perforated layer (4) being filled completely with the light refractory or a mixture thereof with a pyrogenic metal oxide and optionally a binder,
c) an intermediate layer (6) arranged on top of the perforated layer (4) and made of the light refractory or a mixture thereof with a pyrogenic metal oxide and optionally a binder,
d) a combined layer (7), wherein first regions (8) made of the light refractory or a mixture thereof with a pyrogenic metal oxide and optionally a binder are present side by side with second regions (9) made of the pyrogenic metal oxide and a binder, the second regions (9) being disposed in the direction of the thickness of the heat insulation material above the holes (5) of the perforated layer (4) and congruent therewith, and
e) a cover layer (10) of a light refractory or a mixture thereof with a pyrogenic metal oxide and optionally a binder.
